Europäisches Patentamt

European Patent Office

Office européen des brevets

(19)

(11) Veröffentlichungsnummer: **0 134 887**
**B1**

(12) **EUROPÄISCHE PATENTSCHRIFT**

(45) Veröffentlichungstag der Patentschrift:
**09.03.88**

(21) Anmeldenummer: **84104735.0**

(22) Anmeldetag: **27.04.84**

(51) Int. Cl.⁴: **D 04 H 1/54**

(54) **Walze zum Verfestigen eines Faservlieses.**

(30) Priorität: **21.07.83 DE 3326281**

(43) Veröffentlichungstag der Anmeldung:
**27.03.85 Patentblatt 85/13**

(45) Bekanntmachung des Hinweises auf die Patenterteilung:
**09.03.88 Patentblatt 88/10**

(84) Benannte Vertragsstaaten:
**AT BE CH DE FR GB IT LI LU NL SE**

(56) Entgegenhaltungen:
**DE - A - 2 103 619**
**FR - A - 1 215 291**
**FR - A - 2 028 705**
**US - A - 2 464 301**
**US - A - 3 542 634**
**US - A - 4 311 540**

(73) Patentinhaber: **Robert Casaretto KG, Solvaystrasse 28,
D-7889 Grenzach-Wyhlen 2 (DE)**

(72) Erfinder: **Wildt, Eberhard, Solvaystrasse 28,
D-7889 Grenzach-Wyhlen (DE)**

(74) Vertreter: **Schmitt, Hans, Dipl.-Ing. et al,
Dreikönigstrasse 13, D-7800 Freiburg (DE)**

**Beschreibung**

Die Erfindung betrifft eine Walze zum Verfestigen von Vlies od. dgl. mittels Wärme und/oder mittels Lösungsmitteln, welche Walze an ihrer Oberfläche eine Schweisspunkt- oder Schweisslinengravur mit der Walzenoberfläche folgenden Schweisspunktflächen an der Oberseite einzelner Noppen oder Rippen hat, wobei die Noppen oder Rippen gegenüber senkrecht zur Walzenoberfläche stehenden Ebenen etwas schräge Flanken im Sinne einer Verbreiterung der Noppen oder Rippen zu ihrer Basis hin haben.

Derartige Walzen sind bekannt (siehe beispielsweise US-A 4 311 540 oder US-A 2 464 301) und dienen dazu, Vliesgebilde zu verfestigen, damit diese als saugfähige Lappen od. dgl. Verwendung finden können. Dabei sind die bisher bekannten Flankenwinkel relativ gross, so dass eine relativ starke Verbreiterung der Noppen auftritt. Dadurch soll verhindert werden, dass beim Gravieren unter Umständen Hinterschneidungen an den Noppen entstehen. Es ergibt sich jedoch vor allem bei dicken Vliesen der Nachteil, dass es zu einer Verschweissung am Vlies auch im Bereich der Flanken kommen kann, was unerwünscht ist. Darüber hinaus ist ein Nachschleifen einer solchen Walze nur im begrenzten Umfang möglich, weil bei einem Nachschleifen die Noppenoberfläche vergrössert und damit der Zwischenraum zwischen den Noppen verkleinert wird.

Es besteht deshalb die Aufgabe, eine Walze der eingangs erwähnten Art zu schaffen, die ein mehrfaches Nachschleifen erlaubt, ohne dass daraus eine Verschlechterung der Verschweissung von Vliesen herrührt. Gleichzeitig soll dennoch ein guter Temperaturdurchfluss für die erforderliche Wärmebehandlung von der Walze zu den Oberseiten der Noppen möglich sein.

Die Lösung dieser scheinbar widersprüchlichen Aufgabe besteht darin, dass die Flanken der Noppen od. dgl. wenigstens zwei Abschnitte unterschiedlicher Flankenwinkel haben, wobei der der Oberseite nähere Bereich einen spitzeren Flankenwinkel als der der Basis nähere Bereich hat. Der der Oberseite nähere Bereich kann also mehrfach nachgeschliffen werden, ohne dass sich die Fläche der Oberseite wesentlich vergrössert. Dennoch wird durch die relativ breite Basis eine gute Wärmezufuhr zu den Obeseiten der Noppen od. dgl. ermöglicht. Darüber hinaus ergibt die starke Verbreiterung der Basis der Noppen oder Rippen eine bessere Stabilität dieser Vorsprünge, so dass diese z.B. auch Schleifkräften gut widerstehen können, ohne dass die Gefahr eines Ausbruches besteht. Ferner haben die spitzeren Flankenwinkel im oberen Bereich den erheblichen Vorteil, dass vor allem auch bei dikken Vliesen keine oder allenfalls eine reduzierte Flankenverschweissung auftritt. Es ergibt sich also, dass die recht teuren gravierten Walzen länger und besser eingesetzt werden können.

Ausgestaltungen und Weiterbildungen der Erfindung sind Gegenstand der Ansprüche 2 bis 10. Die erwähnten Rippen sind dabei in der Regel an bei parallelen Walzen jeweils einander entgegengesetzt ansteigend vorgesehen, so dass sie sich kreuzen und entsprechende punktförmige Verschweissungen an einem Vlies erzeugen können. Bevorzugt lässt sich die Erfindung jedoch an Walzen durchführen, deren Oberfläche mit einer Vielzahl von einzelnen Noppen besetzt ist, wobei diese Noppen und ihre Zwischenräume miteinander auf Umfangskreisen und/oder auf Schraubenlinien an der Oberfläche der Walze angeordnet sein können.

Nachstehend ist die Erfindung anhand der Zeichnung in einem Ausführungsbeispiel noch näher beschrieben. Es zeigt in schematisierter Darstellung:

Fig. 1 eine Ansicht eines Teilstückes einer erfindungsgemässen Walze, wobei ein Bereich mit Noppen angedeutet ist, die der besseren Übersicht wegen vergrössert dargestellt sind, sowie

Fig. 2 in stark vergrössertem Massstab einen Längsschnitt durch zwei einander benachbarte Noppen, die an der Oberseite einer Walze gemäss Fig. 1 angeordnet sind.

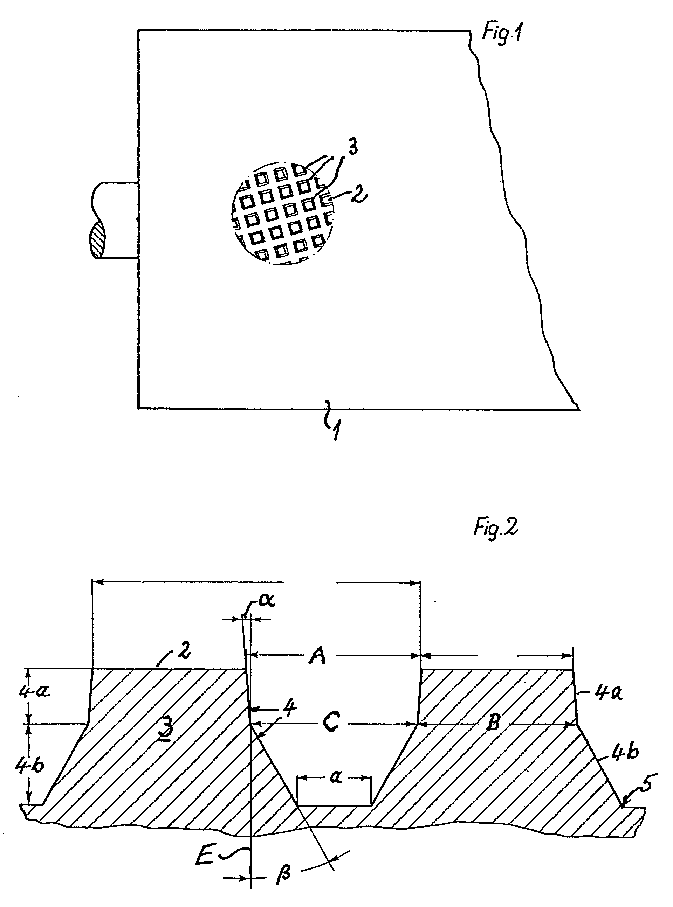

Eine im ganzen mit 1 bezeichnete Walze dient im Zusammenwirken mit einer zweiten derartigen Walze in bekannter Weise zum Verfestigen von Vlies od. dgl. mittels Wärme und/oder mittels Lösungsmitteln. Die Walze 1 hat dabei an ihrer Oberfläche eine Schweisspunktgravur mit der Walzenoberfläche folgenden Schweisspunktflächen 2 an der Oberseite einzelner Noppen 3. Gegenüber senkrecht zur Walzenoberfläche stehenden Ebenen E haben die Noppen 3 gemäss Fig. 2 schräge Flanken 4 im Sinne einer Verbreiterung der Noppen 3 zu ihrer Basis 5 hin.

In Fig. 2 erkennt man, dass die Flanken 4 der Noppen 3 zwei Abschnitte 4a und 4b unterschiedlicher Flankenwinkel $\alpha$ und $\beta$ haben. Der der Oberseite 2 nähere Bereich 4a hat dabei den spitzeren Flankenwinkel $\alpha$ als der der Basis 5 nähere Bereich 4b. Bei Betrachten der Fig. 2 erkennt man deutlich, dass dadurch einerseits eine gute und gezielte Wärmeleitung von dem Walzeninneren zu den Oberseiten 2 der Noppen 3 hin möglich ist und dass diese Noppen 3 eine hohe Stabilität auch gegen Querkräfte haben.

Die Noppen 3 können dabei einen quadratischen oder rautenförmigen Grundriss haben und in ihrem oberen Bereich 4a kann ein Flankenwinkel von 0 bis 20°, vorzugsweise von etwa 2° bis 10°, insbesondere von etwa 4°, vorgesehen sein. Ein solcher Flankenwinkel von etwa 4° lässt sich noch gut gravieren, ergibt in erwünschter Weise noch eine leichte Konusform auch des oberen Bereiches 4a der Noppen 3 und führt dennoch bei einem Nachschliff der Oberseiten 2 nicht zu einer wesentlichen Vergrösserung der Noppenoberflächen.

Der Flankenwinkel $\beta$ im Bereich 4b der sich verbreiternden Basis 5 kann vorzugsweise 15 bis 45°, vorzugsweise gemäss dem Ausführungsbeispiel etwa 30° betragen.

In Fig. 2 erkennt man, dass die beiden Noppenabschnitte 4a und 4b nahezu die gleiche Höhe haben, wobei jedoch der der Basis 5 nähere Bereich 4b mit dem grösseren Flankenwinkel im Ausführungsbeispiel höher als der obere Bereich 4a mit dem spitzeren Flankenwinkel ist. Dadurch wird die Stabilität und die Wärmeleitung verbessert. Im Ausführungsbeispiel verhält sich die Höhe des oberen Noppenabschnittes 4a zu der Höhe des breitern Noppenabschnittes 4b etwa wie 3:5.

Die Noppen haben im Ausführungsbeispiel an ihrem unteren Rand, also der Basis 5, wo sie selbst ihre grösste Breite haben, einen Abstand a voneinander, der im Ausführungsbeispiel kleiner als die Hälft des Abstandes A an der Oberfläche 2 ist. Dieser Abstand a der Noppen 3 an ihrer tiefsten Stelle kann dabei etwa der halben Höhe der gesamten Noppe 3 entsprechen.

Man erkennt in Fig. 2 ferner, dass der lichte Abstand C zweier benachbarter Noppen 3 am Übergang von dem oberen Bereich 4a zu dem tiefer liegenden, sich verbreiternden Abschnitt 4b gleich oder geringfügig grösser als die Breite B einer Noppe 3 an dieser Stelle ist. Es ergibt sich durch diese geometrischen Verhältnisse eine harmonische Gestaltung der Zwischenräume zwischen den verschiedenen Noppen 3, die einerseits einem Vlies genügend Platz lassen, um Randverschweissungen zu vermeiden oder weitgehend klein zu halten und die dennoch auch wieder ein gutes Lösen eines Vlieses nach der Bearbeitung erlauben. Darüber hinaus können die Noppen an ihren Oberseiten 2 mehrfach nachgeschliffen werden. Die Zwischenräume zwischen den Noppen 3 lassen sich dabei auf beliebige Weise gravieren, wobei die insgesamt konische Form der Zwischenräume und vor allem die verstärkte Verjüngung im tieferen Bereich der Zwischenräume dem Gravieren entgegenkommt.

## Patentansprüche

1. Walze (1) zum Verfestigen von Vlies od. dgl. mittels Wärme und/oder mittels Lösungsmitteln, welche Walze an ihrer Oberfläche eine Schweisspunkt- oder Schweissliniengravur mit der Walzenoberfläche folgenden Schweisspunktflächen (2) an der Oberseite einzelner Noppen oder Rippen hat, wobei die Noppen oder Rippen gegenüber senkrecht zur Walzenoberfläche stehenden Ebenen (E) etwas schräge Flanken (4) im Sinne einer Verbreiterung der Noppen oder Rippen zu ihrer Basis (6) haben, dadurch gekennzeichnet, dass die Flanken der Noppen od. dgl. wenigstens zwei Abschnitte unterschiedlicher Flankenwinkel (α, β) haben, wobei der der Oberseite (2) nähere Bereich (4a) einen spitzeren Flankenwinkel (α) als der der Basis (5) nähere Bereich (4b) hat.

2. Walze nach Anspruch 1, dadurch gekennzeichnet, dass die Rippen oder die vorzugsweise quadratischen oder rautenförmigen Noppen (3) in ihrem oberen Bereich (4a) einen Flankenwinkel (α) von 0 bis 20°, vorzugsweise etwa 2° bis 10° und insbesondere von etwa 4°, haben.

3. Walze nach Anspruch 1 oder 2, dadurch gekennzeichnet, dass der Flankenwinkel (β) im Bereich (4b) der sich verbreiternden Basis (5) 15° bis 45°, vorzugsweise etwa 30°, beträgt.

4. Walze nach Anspruch 1 bis 3, dadurch gekennzeichnet, dass der der Basis (5) nähere Bereich (4b) mit dem grösseren Flankenwinkel höher als der obere Bereich (4a) mit dem spitzeren Flankenwinkel ist.

5. Walze nach Anspruch 1 bis 3, dadurch gekennzeichnet, dass die beiden Noppenabschnitte nahezu die gleiche Höhe haben.

6. Walze nach einem der Ansprüche 1 bis 4, dadurch gekennzeichnet, dass die Höhe des oberen Noppenabschnittes (4a) zu der Höhe des breiteren Noppenabschnittes (4b) sich etwa wie 3 zu 5 verhält.

7. Walze nach einem der Ansprüche 1 bis 6, dadurch gekennzeichnet, dass die Noppen an ihrem unteren Rand einen Abstand (a) voneinander haben, der vorzugsweise kleiner als die Hälfte des Abstandes (A) an der Oberfläche (2) ist.

8. Walze nach einem der Ansprüche 1 bis 7, dadurch gekennzeichnet, dass der Abstand der Noppen an ihrer tiefsten Stelle etwa der halben Höhe der gesamten Noppe (3) entspricht.

9. Walze nach einem der Ansprüche 1 bis 8, dadurch gekennzeichnet, dass der lichte Abstand (C) der Noppen (3) am Übergang von dem oberen zu dem tiefer liegenden sich verbreiternden Abschnitt (4b) gleich oder geringfügig grösser als die Breite der Noppe (3) an dieser Stelle ist.

10. Walze nach einem der vorstehenden Ansprüche, dadurch gekennzeichnet, dass die Noppen (3) und ihre Zwischenräume miteinander auf Umfangskreisen und/oder auf Schraubenlinien an der Oberfläche der Walze (1) angeordnet sind.

## Claims

1. A roll for consolidating a fibre web or the like by means of heat and/or by means of solvents, said roll having on its surface an engraving comprising welding spots or welding lines and having welding spot faces (2) which follow the roll surface and are located at the top of individual knops or ribs, said knops or ribs having flanks (4) which are somewhat inclined relative to planes (E) perpendicular to the roll surface so that the knops or ribs are widened towards their base (5), characterized in that the flanks of the knops or the like have at least two segments of different flank angles (α, β), the area (4a) more proximate to the top (2) having a more acute flank angle (α) than the area (4b) more proximate to the base (5).

2. The roll as claimed in claim 1, characterized in that the ribs or the preferably square or rhombic knops (3) have in their upper area (4a) a flank angle (α) of 0 to 20°, preferably about 2° to 10° and in particular of about 4°.

3. The roll as claimed in claim 1 or claim 2, characterized in that the area (4b) of the widened base (5) the flank angle (β) is 15 to 45°, preferably about 30°.

4. The roll as claimed in claims 1 to 3, characterized in that the area (4b) more proximate to the base (5) and having the larger flank angle is higher than the upper area (4a) having the more acute flank angle.

5. The roll as claimed in claims 1 to 3, characterized in that the two knop segments are of almost the same height.

6. The roll as claimed in any one of claims 1 to 4, characterized in that the ratio of the height of the upper knop segment (4a) to the height of the wider knop segment (4b) is about 3 to 5.

7. The roll as claimed in any one of claims 1 to 6, characterized in that the knops have at their lower edge a distance (a) from one another which is preferably smaller than half the distance (A) at the surface (2).

8. The roll as claimed in any one of claims 1 to 7, characterized in that the distance of the knops at their deepest point corresponds to about half the height of the entire knop (3).

9. The roll as claimed in any one of claims 1 to 8, characterized in that the clearance (C) of the knops (3) at the transition from the upper to the lower, widened segment (4b) is equal to or slightly larger than the width of the knop (3) at this point.

10. The roll as claimed in any one of the preceding claims, characterized in that the knops (3) and the interspaces thereof are jointly disposed on circumferential circles and/or on helical curves on the surface of the roll (1).

## Revendications

1. Rouleau (1) pour la consolidation d'une nappe de fibres, ou substance analogue, par apport de chaleur et/ou au moyen de solvants, ce rouleau présentant à sa surface une structure en creux formant des points ou des lignes de soudage avec, à la face supérieure de protubérances ou nervures individuelles, des faces (2) formant des points de soudage et suivant la surface du rouleau, les protubérances ou nervures comportant, par rapport à des plans (E) perpendiculaires à la surface du rouleau, des flancs (4) sensiblement inclinés dans le sens d'un élargissement des protubérances ou nervures par rapport à leur base (5), caractérisé par le fait que les flancs des protubérances, ou configurations analogues, comprennent au moins deux tronçons à angles de dépouille différents ($\alpha$, $\beta$), la région (4a) rapprochée de la face supérieure (2) accusant un angle de dépouille ($\alpha$) davantage aigu que la région (4b) rapprochée de la base (5).

2. Rouleau selon la revendication 1, caractérisé par le fait que les nervures ou les protubérances (3) de préférence carrées ou rhombiformes possèdent, dans leur région supérieure (4a), un angle de dépouille ($\alpha$) de 0 à 20°, de préférence d'environ 2° à 10°, et notamment d'environ 4°.

3. Rouleau selon la revendication 1 ou 2, caractérisé par le fait que l'angle de dépouille ($\beta$) mesure de 15° à 45°, de préférence environ 30° dans la région (4b) de la base (5) s'élargissant.

4. Rouleau selon les revendications 1 à 3, caractérisé par le fait que la région (4b) rapprochée de la base (5) et possédant le grand angle de dépouille est plus haute que la région supérieure (4a) possédant l'angle de dépouille plus aigu.

5. Rouleau selon les revendications 1 à 3, caractérisé par le fait que les deux tronçons des protubérances ont approximativement la même hauteur.

6. Rouleau selon l'une des revendications 1 à 4, caractérisé par le fait que le rapport est d'environ 3 à 5 entre la hauteur du tronçon supérieur (4a) des protubérances et la hauteur du tronçon plus large (4b) de ces protubérances.

7. Rouleau selon l'une des revendications 1 à 6, caractérisé par le fait que les protubérances sont espacées mutuellement, à leur arête inférieure, d'une distance (a) qui est, de préférence, plus petite que la moitié de la distance (A) à la face supérieure (2).

8. Rouleau selon l'une des revendications 1 à 7, caractérisé par le fait que la distance entre les protubérances, dans leur région la plus profonde, correspond sensiblement à la demi-hauteur de la protubérance intégrale (3).

9. Rouleau selon l'une des revendications 1 à 8, caractérisé par le fait que, à la transition entre le tronçon supérieur et le tronçon élargi (4b) relégué plus bas, la distance interne (C) entre les protubérances (3) est égale ou légèrement supérieur à la largeur de la protubérance (3) dans cette zone.

10. Rouleau selon l'une des revendications précédentes, caractérisé par le fait que les protubérances (3) et leurs espaces intermédiaires sont disposés conjointement, à la surface du rouleau (1), sur des cercles périphériques et/ou sur des lignes hélicoïdales.

Fig.1

Fig.2